# EUROPÄISCHE PATENTANMELDUNG

(11) **EP 1 389 729 A1**
(43) Veröffentlichungstag der Anmeldung: **18.02.2004**
(21) Anmeldenummer: 02018113.7
(22) Anmeldetag: 13.08.2002
(51) Int. Cl.: G01F 23/00, G01F 9/00

(54) **Füllmengenüberwachungsverfahren und -vorrichtungen**

(71) Anmelder: SFC Smart Fuel Cell AG, 85649 Brunnthal-Nord (DE)
(72) Erfinder: Freitag, Oliver, 81667 München (DE); Müller, Jens, Dr., 81827 München (DE); Rothkopf, Kurt, 81539 München (DE); Stefener, Manfred, 81827 München (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zur Überwachung der Fluidmenge in einem Fluidbehälter, bei welchem zu einem ersten Zeitpunkt die im Fluidbehälter vorhandene Fluidmenge ermittelt wird, und zu einem zweiten Zeitpunkt die zwischen dem ersten Zeitpunkt und dem zweiten Zeitpunkt entnommene Menge an Fluid ermittelt wird und wenigstens eine Größe gespeichert wird, die für die zum zweiten Zeitpunkt im Fluidbehälter vorhandene Fluidmenge repräsentativ ist. Ferner betrifft die Erfindung einen Fluidbehälter, der eine Informationsspeichereinrichtung, in der die im Fluidbehälter vorhandene Fluidmenge oder wenigstens eine andere Größe, die für die im Fluidbehälter vorhandene Fluidmenge repräsentativ ist, gespeichert werden kann, und/oder eine Kodiereinrichtung, um Fluidbehälter unterscheidbar zu machen. Außerdem betrifft die Erfindung ein System zur Verwendung solcher Fluidbehälter.

## Beschreibung

Die vorliegende Erfindung betrifft ein Verfahren zur Überwachung der Fluidmenge in einem Fluidbehälter, bei welchem zu einem ersten Zeitpunkt die im Fluidbehälter vorhandene Fluidmenge ermittelt wird, und zu einem zweiten Zeitpunkt die zwischen dem ersten Zeitpunkt und dem zweiten Zeitpunkt entnommene Menge an Fluid ermittelt wird und wenigstens eine Größe gespeichert wird, die für die zum zweiten Zeitpunkt im Fluidbehälter vorhandene Fluidmenge repräsentativ ist. Ferner betrifft die Erfindung einen Fluidbehälter, der eine Informationsspeichereinrichtung, in der die im Fluidbehälter vorhandene Fluidmenge oder wenigstens eine andere Größe, die für die im Fluidbehälter vorhandene Fluidmenge repräsentativ ist, gespeichert werden kann, und/oder eine Kodiereinrichtung, um Fluidbehälter unterscheidbar zu machen. Außerdem betrifft die Erfindung ein System zur Verwendung solcher Fluidbehälter.

### Stand der Technik

In vielen Einsatzgebieten wird durch Vorrichtungen aus Flüssigkeits- oder Gasbehältern Flüssigkeit oder Gas entnommen, um damit ein System zu versorgen. Beispiele für solche Systeme sind Tintenstrahldrucker, Verbrennungsmotoren, Gaskocher, Brennstoffzellen, etc.

Ein Benutzer solcher Systeme wünscht in der Regel Informationen, wie lange er mit einem angeschlossenen Behälter das System noch betreiben kann oder wie viele Seiten er noch bedrucken kann oder welche Strecke er noch zurücklegen kann, etc.

Daher ist es bei diesen Systemen vielfach erforderlich oder wenigstens wünschenswert, wenn eine Einrichtung vorhanden ist, die den Benutzer über den aktuellen Behälterinhalt auf dem Laufenden hält und/oder vom aktuellen Behälterinhalt abhängige Informationen (z.B. Restlaufzeit) bereit stellt.

Bei Gasbehältern basieren die herkömmlichen Methoden zur Anzeige des Behälterinhalts meistens auf Druckmessungen. Der gemessene Druck kann einfach in eine Füllmenge umgerechnet werden, da - in für die meisten Anwendungen ausreichend genauer Näherung - der Gasdruck proportional zur Gasmenge ist.

Bei Flüssigkeiten werden für gewöhnlich Füllstandsmessungen durchgeführt. Dabei kann die Lage des Flüssigkeitsspiegels direkt zur optischen Füllstandsanzeige verwendet werden (z.B. Kaffeemaschine), oder es werden Schwimmer zur Ermittlung des Flüssigkeitsspiegels, und daraus des Füllstands, verwendet (z.B. Kraftfahrzeuge). Diese Verfahren liefern i.d.R. nur in einer bestimmten Lage des Behälters zuverlässige Werte. Bei nicht-transparenten oder in Vorrichtungen eingebauten Behältern ist eine jederzeit sichtbare Füllstandsanzeige zudem mit einem nicht unerheblichen Aufwand (z.B. Tankanzeige bei Kraftfahrzeugen) verbunden.

Bei großvolumigen, stationären Flüssigkeitsbehältern werden auch akustische Verfahren (Ultraschall) verwendet, um die im Behälter vorhandene Flüssigkeitsmenge zu ermitteln. Für kleine Behälter ist dieses Verfahren aber weniger geeignet bis ungeeignet. Vor allem bei kleinvolumigen Massenartikeln, beispielsweise Tintenkartuschen, Brennstoffkartuschen (Gas oder Flüssigkeit) etc., kommen die meisten der oben genannten Verfahren aus Kosten- und/oder Platzgründen und/oder komplexer Behältergeometrien und/oder variabler Behälterorientierung nicht in Frage.

### Beschreibung der Erfindung

Angesichts der oben geschilderten Sachlage ist es eine Aufgabe der vorliegenden Erfindung, ein Verfahren bereitzustellen, das es ermöglicht, den Inhalt (bzw. Restinhalt) von Fluidbehältern unter Vermeidung der verschiedenen oben angegebenen Nachteile zu ermitteln.

Femer ist es eine Aufgabe der Erfindung, Fluidbehälter und Fluidentnahmesysteme bereitzustellen, die dazu eingerichtet sind, um den Inhalt der Fluidbehälter unter Verwendung des erfindungsgemäßen Verfahrens zu ermitteln.

Erfindungsgemäß wird ein Verfahren zur Überwachung der Fluidmenge in einem Fluidbehälter bereitgestellt, welches die folgenden Schritte umfasst: zu einem ersten Zeitpunkt wird die im Fluidbehälter vorhandene Fluidmenge bestimmt; zu einem zweiten Zeitpunkt wird die Fluidmenge ermittelt, die zwischen dem ersten und dem zweiten Zeitpunkt aus dem Fluidbehälter entnommen wurde und wenigstens eine Größe gespeichert, die für die zum zweiten Zeitpunkt im Fluidbehälter vorhandene Fluidmenge repräsentativ ist.

Der Vorteil der Erfindung beruht darauf, dass mit dem erfindungsgemäßen Verfahren zum Überwachen der Fluidmenge in einem Behälter kein Messen der Fluidmenge im Behälter erforderlich ist. Vielmehr wird die bei einer Fluidentnahme entnommene Fluidmenge direkt (z.B. mittels eines Durchflussmessers) oder indirekt (z.B. über Anzahl der Arbeitsvorgänge, etc.) ermittelt und durch Subtraktion dieser Fluidmenge von einem Startwert zu Beginn (erster Zeitpunkt) der Fluidentnahme der zum zweiten Zeitpunkt aktuelle Wert ermittelt.

Beim Verfahren sind in einigen Anwendungen zwei Situationen zu unterscheiden, nämlich ob schon vor dem besagten "ersten Zeitpunkt" eine Fluidentnahme erfolgt war oder nicht. Wenn dies nicht der Fall war, so kann das Bestimmen der Fluidmenge zum ersten Zeitpunkt auf einfache Weise durch die Feststellung erfolgen, dass ein befüllter Fluidbehälter eine vorgegebene Fluidmenge enthält. So werden z.B. normierte Gaskartuschen, die vor allem im Camping/Caravan-Bereich Verwendung finden, zur Fluidentnahme durch eine Entnahmeinrichtung durchstoßen, so dass sie nur im vollständig gefüllten Zustand in die Entnahmevorrichtung eingesetzt werden können.

In vielen Fällen aber ist allein die Feststellung, dass aus dem verwendeten Fluidbehälter zuvor noch keine Fluidentnahme erfolgt ist, nicht ausreichend, um die im Fluidbehälter vorhandene Fluidmenge zu bestimmen. Insbesondere können beispielsweise ein und derselbe Typ von Fluidbehältern mit unterschiedlichen Füllmengen bereitgestellt werden.

In einer bevorzugten Weiterbildung des erfindungsgemäßen Verfahrens umfasst daher das Bestimmen der zum ersten Zeitpunkt im Fluidbehälter vorhandenen Fluidmenge das Auslesen einer am Fluidbehälter vorgesehenen Information. Unter "vorgesehen" ist zu verstehen, dass diese Information nur auslesbar, aber im Rahmen des Verfahrens nicht überschreibbar ist. Ein Beispiel für das Vorsehen der Information ist ein aufgeklebter Barcode. Neben der Angabe der ursprünglichen Füllmenge kann die Information auch Angaben umfassen, die zur Identifizierung des Fluidbehälters dienen und ihn von anderen Fluidbehältern unterscheidbar machen.

In einer bevorzugten Weiterbildung umfasst das Bestimmen der zum ersten Zeitpunkt im Fluidbehälter vorhandenen Fluidmenge das Auslesen einer Informationsspeichereinrichtung. Diese Informationsspeichereinrichtung kann sowohl an dem Fluidbehälter, als auch im Entnahmesystem vorgesehen sein. In ihr wird jeweils zu vorgegebenen oder anders bestimmten Zeitpunkten die wenigstens eine Größe gespeichert, die für die im Fluidbehälter zu diesen Zeitpunkten vorhandene Fluidmenge repräsentativ ist. Beim Beginn eines Entnahmevorgangs, aber unter Umständen auch zu anderen Zeitpunkten, wird diese Informationsspeichereinrichtung wieder ausgelesen, um aus der wenigstens einen Größe die zu diesem Zeitpunkt im Fluidbehälter vorhandene Fluidmenge zu bestimmen. Diese Größe kann direkt zur Fluidmenge proportional sein, sie kann aber z.B. auch eine gerundete und u.U. grobstufige prozentuale Information über die noch vorhandene Fluidmenge umfassen.

Das Auslesen von Information aus der Informationsspeichereinrichtung, und ebenso das Speichern von Information in der Informationsspeichereinrichtung, erfolgt durch eine Lese-/Schreibeinrichtung, die mit einer Steuereinrichtung verbunden ist. Die Steuereinrichtung überwacht oder ermittelt die zwischen dem erstem und dem zweiten Zeitpunkt entnommene Fluidmenge. Dies kann direkt über eine Durchflussmessung erfolgen, aber auch indirekt über Leistungsmessung, Blattzähler (bei Druckern), etc.

Wie oft und zu welchen Zeitpunkten ein Beschreiben bzw. ein Auslesen durchgeführt wird, hängt vom Einzelfall ab. Ist eine Fluidentnahme mit einem kontinuierlichen Fluidstrom verbunden, so ist es zweckmäßig, dass jeder Beginn eines Entnahmevorgangs einen ersten Zeitpunkt definiert und jedes Ende einen zweiten Zeitpunkt definiert. In diesem Fall wird nur beim Ende eines Fluidentnahmevorgangs ein Beschreiben der Informationsspeichereinrichtung und zu Beginn eines Entnahmevorgangs ein Auslesen durchgeführt. Alternativ kann ein vorgegebenes Zeitintervall vorgegeben werden, nach dessen Verstreichen jeweils die gespeicherte(n) Größe(n) aktualisiert werden. Ebenso kann eine Fluidmenge vorgegeben werden, nach deren Entnahme jeweils die gespeicherte(n) Größe(n) aktualisiert werden.

Die Informationsspeichereinrichtung kann wahlweise am Fluidbehälter oder im Entnahmesystem vorgesehen sein. Aber auch wenn der Fluidbehälter selbst eine Informationsspeichereinrichtung aufweist, ist es vorteilhaft - unter anderem um die Anzahl von Auslese-/Schreibvorgängen am Fluidbehälter klein zu halten - wenn die Steuervorrichtung Zugriff auf eine vom Fluidbehälter unabhängige Informationsspeichereinrichtung (z.B. RAM) hat. In dieser können laufend aktualisierte Werte zwischengespeichert werden, so dass ein Beschreiben der Informationsspeichervorrichtung nur bei Ende eines Entnahmevorgangs, unter Umständen sogar erst bei einem beabsichtigten Entfernen des (noch teilweise gefüllten) Fluidbehälters erforderlich ist. Falls es aber ohne größeren technischen Aufwand möglich ist, können die laufend aktualisierten Werte auch auf der Informationsspeichereinrichtung des Fluidbehälters gespeichert werden.

In einer besonders nutzerfreundlichen Weiterbildung umfasst das erfindungsgemäße Verfahren das Anzeigen der wenigstens einen Größe, die für die Fluidmenge im Fluidbehälter repräsentativ ist. Die angezeigte Größe kann die restliche Fluidmenge im Fluidbehälter und/oder die Restlaufzeit einer mit dem Fluid betriebenen Vorrichtung und/oder die Anzahl von mit der restlichen Fluidmenge noch möglichen Arbeitsvorgängen umfassen. Die repräsentative Größe kann auch zur Fluidmenge im Fluidbehälter komplementär sein, also z.B. die aus dem Fluidbehälter entnommene Fluidmenge und/oder die mit dem angeschlossenen Fluidbehälter erzielte Betriebsdauer und/oder die Anzahl von bislang getätigten Arbeitsvorgängen umfassen. Welche dieser Größen am informativsten ist, hängt vom jeweiligen Einsatzgebiet ab. So kann z.B. bei einem Drucker mit Druckpatronen mit einer für einen Durchschnittsverbrauch geltenden Kapazität zum Bedrucken von 1000 Seiten (um nur ein Beispiel zu nehmen) die Angabe der bislang gedruckten Seiten sinnvoller sein, als eine zwangsweise ungenaue Angabe von noch bedruckbaren Seiten. Bei einem mit aus einem Brennstoffbehälter betriebenen Notstromaggregat dagegen ist die mit der aktuellen Füllung erreichbare Restlaufzeit von überragender Bedeutung. Es können auch mehrere Größen gleichzeitig angegeben werden, z.B. die Restlaufzeiten bei "Standgas" (Leerlaufbetrieb) und bei "Vollgas" (maximale Leistung), die noch bedruckbaren Seiten bei Ausdrücken minderer und höchster Qualität, etc. Alle diese anzeigbaren Größen können in der Informationsspeichervorrichtung des Fluidbehälters gespeichert werden.

In einer besonders bevorzugten Weiterbildung des erfindungsgemäßen Verfahrens werden Sicherheitsmaßnahmen durchgeführt, wenn die wenigstens eine repräsentative Größe wenigstens einen vorbestimmten Wert unterschreitet oder überschreitet. So kann die Fluidentnahme aus dem betreffenden Fluidbehälter eingestellt werden, wenn die Füllmenge einen vorgegebenen Wert unterschreitet, um beispielsweise zu vermeiden, dass anstelle einer Flüssigkeit eine Gasphase entnommen wird. Bei Druckern kann somit beispielsweise ein Druckauftrags abgebrochen werden, wenn damit gerechnet werden muss, dass die nachfolgenden Ausdrücke, oder wenigstens ein Teil davon, nur noch mit unzulänglicher Qualität durchgeführt werden würden. Falls erwünscht, kann eine Option bereitgestellt werden, die es ermöglicht, das Einleiten solcher Sicherheitsmaßnahmen generell oder im Einzelfall nach jedem Auftreten zu unterdrücken.

Sicherheitsmaßnahmen wie das Einstellen (des Versuchs) der Fluidentnahme können alternativ oder zusätzlich auch dann eingeleitet werden, wenn die wenigstens eine repräsentative Größe wenigstens einen vorbestimmten Wert unterschreitet oder überschreitet und/oder wenn die am Fluidbehälter vorgesehene Information nicht auslesbar ist und/oder wenn am Fluidbehälter keine Information vorgesehen ist und/oder wenn die Informationsspeichereinrichtung nicht ausgelesen und/oder nicht beschrieben werden kann.

Dies kann vor Gefahren schützen, die z.B. dann auftreten können, wenn der Fluidbehälter beschädigt ist oder nicht richtig angeschlossen ist oder nicht korrekt verwendet wird. So kann ein Wiederbefüllen des Fluidbehälters aus sicherheitstechnischen Gründen bedenklich sein, sei es, weil die Handhabung des Fluids an sich gefährlich ist, oder weil der Behälter nicht für ein Wiederverwenden geeignet ist. Wird ein solches Befüllen eines zuvor entleerten Behälters dennoch durchgeführt, so zeigt die Informationsspeichereinrichtung immer noch die Information an, dass die wenigstens eine repräsentative Größe dieses Behälters wenigstens einen vorbestimmten Wert unterschreitet oder überschreitet. Es werden also Sicherheitsmaßnahmen eingeleitet, die auch dadurch nicht umgangen werden kann, wenn die Informationsspeichereinrichtung am Fluidbehälter vorgesehen ist und mutwillig beschädigt oder entfernt wird.

Neben oder alternativ zu dem schon erwähnten Blockierens der Fluidentnahme können die Sicherheitsmaßnahmen auch das Aussenden eines akustischen und/oder optischen Signals umfassen, die den Nutzer rechtzeitig auf Probleme oder die anstehende Notwendigkeit des Austauschs des Fluidbehälters hinweisen.

In einer besonders bevorzugten Weiterbildung für Fälle, bei denen die Informationsspeichereinrichtung am Fluidbehälter vorgesehen ist, verursacht das Auslesen und/oder das Speichern von Information irreversible Änderungen an der Informationsspeichereinrichtung. Dies erlaubt sehr einfache und preiswerte Ausführungen der Informationsspeichereinrichtung. So kann z.B. eine früher gespeicherte Information durch eine aktuelle Information ersetzt werden, indem die erstere ergänzt und nicht, wie vielfach üblich, komplett überschrieben wird. In diesem Fall kann beispielsweise die sukzessive zu speichernden Restmengen nur in streng monoton abnehmenden aufeinanderfolgenden Werten gespeichert werden. Dadurch wird zudem ein Manipulieren der in der Informationsspeichereinrichtung gespeicherten Information verhindert, so dass ein von nicht dazu qualifizierten oder autorisierten Personen durchgeführtes Wiederbefüllen bereits entleerter Behälter noch zuverlässiger verhindert werden kann.

Gemäß einem weiteren Aspekt der vorliegenden Erfindung wird ein Fluidbehälter bereitgestellt, der eine Informationsspeichereinrichtung und/oder eine Kodiereinrichtung aufweist. Die Informationsspeichereinrichtung dient zum Speichern wenigstens einer Größe, die für die im Fluidbehälter vorhandene Fluidmenge repräsentativ ist. Das Auslesen dieser Größe ersetzt somit eine eigentliche Messung der Füllmenge. Die Kodiereinrichtung letztere dient zur Unterscheidung von Fluidbehältern. Sie kann daneben auch zur Angabe wenigstens einer Größe dienen, die für die im ausgelieferten Zustand ursprünglich vorhandene Fluidmenge repräsentativ ist. Im "und"-Fall kann die Informationsspeichereinrichtung die Kodiereinrichtung umfassen, beispielsweise in Form eines nichtü berschreibbaren Abschnitts in der Informationsspeichereinrichtung.

Die Informationsspeichereinrichtung und/oder die Kodiereinrichtung können beispielsweise einfach an einer vorgegebenen Stelle der Oberfläche des Fluidbehälters aufgebracht sein. Alle technisch aufwendigeren Komponenten, die zum Ermitteln, Auslesen und Schreiben von Information erforderlich sind, sind nicht Bestandteil des Fluidbehälters, sondern des diese Behälter verwendenden Systems. Dadurch wird ein Fluidbehälter mit einer Füllmengen-"Anzeigeeinrichtung" bereitgestellt, der keine Messeinrichtung (Schwimmer, etc.) zum Ermitteln der Füllmenge (oder einer damit verbundenen Größe) benötigt und dadurch wesentlich einfacher aufgebaut sein und billiger hergestellt werden kann.

In einer besonders bevorzugten Weiterbildung ist die Informationsspeichereinrichtung des Fluidbehälters so ausgebildet, dass das Speichern von Information in der Informationsspeichereinrichtung irreversible Änderungen an der Informationsspeichereinrichtung bewirkt. Die damit verbundenen Vorteile wurden oben schon erwähnt und bedürfen keiner nochmaligen Wiederholung.

Die Informationsspeichereinrichtung kann in einer besonders kostengünstigen Weiterbildung eine Anordnung von Leiterbahnen umfassen, wobei die Information in der Anordnung von intakten oder defekten Leiterbahnen gespeichert ist. Beispielsweise kann auf dem Fluidbehälter eine Platine mit einer Reihe von Kontakten angebracht, die durch dünne Leiterbahnen verbunden sind. Jede dieser Leiterbahnen entspricht eine Füllmenge. Zum Auslesen, d.h. Bestimmen der intakten Leiterbahnen, werden die Kontakte von entsprechenden Gegenkontakten berührt und die Widerstandswerte der Leiterbahnen ermittelt. Zum Überschreiben der gespeicherten wird durch Anlegen einer Spannung an das entsprechende Kontaktpaar die sie verbindende Leiterbahn durchgeschmolzen.

In einer alternativen oder zusätzlichen bevorzugten Weiterbildung umfasst die Informationsspeichereinrichtung des Fluidbehälters einen elektrischen und/oder magnetischen Datenspeicher, insbesondere einen EEPROM-Chip und/oder eine Magnetfolie (z.B. ein Magnetband).

Gemäß einem weiteren Aspekt der vorliegenden Erfindung wird ein Fluidentnahmesystem bereitgestellt, das zur Verwendung mit den erfindungsgemäßen Fluidbehältem eingerichtet ist, und eine Fluidentnahmeeinrichtung zum Anschließen eines solchen Fluidbehälters, eine Steuereinrichtung, und eine Lese-/Schreibeinrichtung umfasst. Falls die Fluidbehältern nicht selbst mit einer Informationsspeichereinrichtung ausgestattet sind, so muss das Fluidentnahmesystem zusätzlich eine Informationsspeichereinrichtung aufweisen. Es können aber sowohl das Fluidentnahmesystem, als auch die Fluidbehälter mit jeweils mit einer Informationsspeichereinrichtung ausgestattet sein.

Im Gegensatz zu herkömmlicher Füllmengenmessung an einem Fluidbehälter wird bei dem erfindungsgemäßen System die Änderung der Füllmenge extern (außerhalb des Fluidbehälters) verfolgt. Der dazu erforderliche Aufwand wird im wesentlichen dem die Fluidbehälter verwendende System aufgebürdet, so dass er als Kostenfaktor für das potentielle Massenprodukt Fluidbehälter nur mehr eine untergeordnete Rolle spielt. Die Mehrkosten des wie oben ausgebildeten Systems können im Betrieb nach einiger Zeit wettgemacht werden; danach weist das erfindungsgemäße System deutlich geringere Betriebskosten als ein herkömmliches System auf, dass Fluidbehälter mit Füllstandsmessung verwendet.

Weitere Aspekte und Vorteile der vorliegenden Erfindung werden nachfolgend anhand von besonders bevorzugten Ausführungsformen und unter Bezugnahme auf ein besonders bevorzugtes Anwendungsgebiet beschrieben.

Diese Bezugnahme erfolgt jedoch ausschließlich allein zur besseren Veranschaulichung der Erfindung, keineswegs aber zur Einschränkung des in den Ansprüchen angegebenen Schutzumfangs auf dies Ausführungsformen und/oder Anwendungsgebiete.

Ein besonders bevorzugtes Anwendungsgebiet sind netzunabhängige elektrische Systeme, die über Brennstoffzellen mit Spannung/Strom versorgt werden. Diese Brennstoffzellen wiederum können über austauschbare Tankpatronen mit Brennstoff versorgt werden. Obwohl die netzunabhängige Stromversorgung zur Zeit immer noch von Akkus dominiert wird, weisen Brennstoffzellen auf diesem Gebiet zahlreiche Vorteile gegenüber Akkus auf. Darüber hinaus haben sie für die nähere Zukunft ein vielversprechendes Entwicklungspotenzial.

Um mit mobilen Brennstoffzellen einen unterbrechungsfreien Betrieb zu gewährleisten, muss ein Nutzer rechtzeitig darauf hingewiesen werden, wenn in absehbarer Zeit ein Wechsel der Patrone erforderlich ist. Dem steht gegenüber, dass für eine austauschbare Tankpatrone die gesamten Herstellungskosten deutlich unter einem Euro bzw. Dollar liegen müssen, um auf dem Massenmarkt eine ernsthafte Konkurrenz für den Akku darzustellen.

Berücksichtigt man noch die Kosten für das Behältergehäuse, die Anschlussmechanik, Sicherheitseinrichtungen und die Füllung an, so verbleibt für die Füllstandserkennung ein Spielraum von höchstens wenigen Cent. Dies verbietet eine komplexe Sensorik im/am Behältergehäuse. Darüber hinaus ist wegen des erwünschten mobilen Einsatzes eine lageunabhängige Ermittlung der Brennstoffmenge erforderlich, so dass sich auch Methoden verbieten, bei denen die Lage des Flüssigkeitsspiegels (z.B. Schwimmerlösungen; resisitive oder kapazitive Messungen) bestimmt wird.

Eine besonders bevorzugte Ausführungsform der vorliegenden betrifft daher eine besondere Ausgestaltung einer austauschbaren Tankpatrone und eines Systems, die es ermöglichen, die Restlaufzeit und/oder die Restmenge und/oder weitere Größen "auf" der Patrone zu speichern und im Betrieb anzuzeigen. Erfindungsgemäß wird der Füllstand der Tankpatrone berechnet - basierend auf der Information, dass jede neue Tankpatrone bei Auslieferung vollständig gefüllt ist, und dem aktuellen Verbrauch des Brennstoffs im Betrieb, der leicht zugänglich ist. Der jeweils aktuelle Füllstand wird dann im Speicher auf der Tankpatrone abgelegt und regelmäßig wieder gelesen. Hierdurch funktioniert diese Technik auch beim Patronenwechsel im laufenden Betrieb.

Einzelne vorteilhafte, d.h. extrem kostengünstige Lösungen werden nun beschrieben.

Auf der Tankpatrone wird ein einfacher, äußerst kostengünstiger Speicher für die Information des Füllstands bzw. der Restlaufzeit angebracht, der während des Betriebs regelmäßig oder kontinuierlich gelesen und überschrieben wird. In der Regel genügt die Anzeige des Füllstands in wenigen Inkrementen, z.B. eine 5-stufige Skala 0 - 25 - 50-75 -100 % für die Füllmenge bzw. 8 h - 6 h - 4 h - 2 h - 0 h für die Restlaufzeit. Es sind natürlich auch genauere Anzeigen möglich.

In einer vorteilhaften Ausführungsform wird auf der Tankpatrone eine winzige Platine mit einer Reihe von z.B. 5 Kontakten angebracht, die bei einer neuen Patrone durch eine sehr dünne Kupferleiterbahn verbunden sind. Mit n Kontakten ist es möglich, n verschiedene Füllstände zu speichern. Das Brennstoffzellen-System ist so gestaltet, dass beim Einsetzen der Patrone die Kontakte von entsprechenden "Fühlern" berührt werden. Zusätzlich verfolgt das System den Volumenstrom des Brennstoffs, der der Patrone entnommen wird (z.B. durch die Integration des geflossenen Stroms zur Dosierpumpe). Ist der nächste Füllstand erreicht, wird durch Anlegen einer Spannung an das entsprechende Kontaktpaar die dünne Leiterbahn durchgeschmolzen (Analogie: elektr. Schmelzsicherung). Kurz vor der völligen Entleerung wird das letzte Kontaktpaar unterbrochen. Hierdurch wird - optional - auch der Betrieb mit vorschriftswidrig wiederbefüllten Tankpatronen verhindert: Das System funktioniert nicht, wenn eine Patrone ohne leitende Durchkontaktierung angeschlossen wird. Dadurch wird gleichzeitig ein Wiederbefüllschutz bereit gestellt: eine nicht qualifizierte Person wird vom Wiederbefüllen der Patrone abgehalten, da das System eine solchermaßen wiederbefüllte Patrone als "leer" erkennt und daher nicht annimmt. Die Leiterbahnen können zusätzlich verdeckt angebracht sein, was Manipulationen mit noch höherer Zuverlässigkeit ausschließt.

Eine Alternative zur oben beschriebenen Informationsspeichereinrichtung ist ein einfacher EEPROM-Chip, der als Informationsspeichereinrichtung auf der Tankpatrone angebracht wird. Während des Betriebs wird in regelmäßigen Abständen dieser Speicher gelesen und neu beschrieben. Auch hier ist optional ein elektronischer Wiederbefüllschutz vorgesehen.

Eine weitere Alternative ist eine Magnetfolie oder ein Magnetband: Ein kleines Stück eines magnetischen Datenträgers wird an der Tankpatrone vorgesehen. Die Schreib-/Lesevorrichtung befindet sich im Patronenschacht des Systems. Beim Einsetzen bzw. Entnehmen der Patrone entsteht "automatisch" die geführte Bewegung der Patrone in dem Patronenschacht, durch die der Magnetspeicher am Schreib-/Lesekopf vorbeigeführt wird. Dabei wird die Information gelesen bzw. geschrieben.

Alle oben geschilderten Ausführungsformen stellen auf äußerst kostengünstige Art und Weise die Möglichkeit zur Ermittlung der Füllmenge bzw. der Restlaufzeit von austauschbaren Tankpatronen bereit.

Wie schon erwähnt, dient die vorangehende Beschreibung von bevorzugten Ausführungsformen nicht der Absicht, die Erfindung auf Brennstoffbehälter oder gar auf das Einsatzgebiet von Brennstoffzellen einzuschränken. Es ist ohne weiteres ersichtlich, dass sich vorteilhafte Anwendungen der Erfindung auch bei Druckem/Photokopierern ergeben, die über Patronen oder Kartuschen mit Tinte oder Toner versorgt werden. Ein weiteres vorteilhaftes Einsatzgebiet sind Gaskartuschen/-flaschen, die beispielsweise zum Betreiben von Gasherden, Boilern u.a. Verbrauchem im Caravan-/Bootbereich, aber auch in gewöhnlichen Haushalten ohne Anschluss an ein kommunales oder regionales Gasnetz verwendet werden. Das erfindungsgemäße Verfahren beschränkt sich auch keineswegs nur auf austauschbare Fluidbehälter, sondern kann auch bei fest installierten, nachfüllbaren Behältern eingesetzt werden, z.B. um den Inhalt eines Heizöltanks, eines Behälters für Scheibenwischflüssigkeit, etc. zu überwachen (und gegebenenfalls anzuzeigen). Der Schutzumfang der Erfindung wird allein durch die nachfolgenden Patentansprüche definiert.

## Patentansprüche

1. Verfahren zur Überwachung der Fluidmenge in einem Fluidbehälter, mit den Schritten:
zu einem ersten Zeitpunkt, Bestimmen der im Fluidbehälter vorhandenen Fluidmenge;
zu einem zweiten Zeitpunkt, Ermitteln der zwischen dem ersten und dem zweiten Zeitpunkt aus dem Fluidbehälter entnommenen Fluidmenge und Speichern wenigstens einer Größe, die für die zum zweiten Zeitpunkt im Fluidbehälter vorhandene Fluidmenge repräsentativ ist.

2. Verfahren nach Anspruch 1, bei welchem das Bestimmen der zum ersten Zeitpunkt im Fluidbehälter vorhandenen Fluidmenge das Auslesen einer am Fluidbehälter vorgesehenen Information umfasst.

3. Verfahren nach einem der vorangegangenen Ansprüche, bei welchem das Bestimmen der zum ersten Zeitpunkt im Fluidbehälter vorhandenen Fluidmenge das Auslesen einer Informationsspeichereinrichtung umfasst.

4. Verfahren nach einem der vorangegangenen Ansprüche, umfassend:
Anzeigen der wenigstens einen Größe, die für die Fluidmenge im Fluidbehälter repräsentativ ist.

5. Verfahren nach einem der vorangegangenen Ansprüche, wobei die wenigstens eine Größe die restliche Fluidmenge im Fluidbehälter und/oder die Restlaufzeit einer mit dem Fluid betriebenen Vorrichtung und/oder die Anzahl von mit der restlichen Fluidmenge noch möglichen Arbeitsvorgängen umfasst.

6. Verfahren nach einem der vorangegangenen Ansprüche, umfassend:
Durchführen von Sicherheitsmaßnahmen, wenn die wenigstens eine repräsentative Größe wenigstens einen vorbestimmten Wert unterschreitet oder überschreitet und/oder wenn die am Fluidbehälter vorgesehene Information nicht auslesbar ist und/oder wenn am Fluidbehälter keine Information vorgesehen ist und/oder wenn die Informationsspeichereinrichtung nicht ausgelesen und/oder nicht beschrieben werden kann.

7. Verfahren nach Anspruch 6, bei welchem die Sicherheitsmaßnahmen das Aussenden eines akustischen und/oder optischen Signals und/oder das Blockieren der Fluidentnahme umfassen.

8. Verfahren nach einem der vorangegangenen Ansprüche, bei welchem das Auslesen und/oder das Speichern von Information irreversible Änderungen an der Informationsspeichereinrichtung verursacht.

9. Fluidbehälter, umfassend:
eine Informationsspeichereinrichtung und/oder eine Kodiereinrichtung.

10. Fluidbehälter nach Anspruch 9, bei welchem das Speichern von Information in der Informationsspeichereinrichtung des Fluidbehälters irreversible Änderungen an der Informationsspeichereinrichtung bewirkt.

11. Fluidbehälter nach Anspruch 10, bei welchem die Informationsspeichereinrichtung eine Anordnung von Leiterbahnen umfasst, wobei die Information in der Anordnung von intakten oder defekten Leiterbahnen gespeichert ist.

12. Fluidbehälter nach einem der Ansprüche 9 bis 11, bei welchem die Informationsspeichereinrichtung einen elektrischen und/oder magnetischen Datenspeicher umfasst.

13. Fluidbehälter nach Anspruch 12, bei welchem die Informationsspeichereinrichtung einen EEPROM-Chip und/oder eine Magnetfolie umfasst.

14. Fluidentnahmesystem zur Verwendung mit einem Fluidbehälter nach einem der Ansprüche 9 bis 13, umfassend:
eine Fluidentnahmeeinrichtung zum Anschließen des Fluidbehälters,
eine Steuereinrichtung,
eine Lese-/Schreibeinrichtung.

15. Fluidentnahmesystem nach Anspruch 14, umfassend:
eine Informationsspeichereinrichtung

## Geänderte Patentansprüche

### Geänderte Patentansprüche gemäss Regel 86(2) EPÜ.

**1.** Verfahren zur Überwachung der Fluidmenge in einem Fluidbehälter, mit den Schritten:
zu einem ersten Zeitpunkt, Bestimmen der im Fluidbehälter vorhandenen Fluidmenge, wozu eine am Fluidbehälter vorgesehene Information ausgelesen wird;
zu einem zweiten Zeitpunkt, Ermitteln der zwischen dem ersten und dem zweiten Zeitpunkt aus dem Fluidbehälter entnommenen Fluidmenge und Speichern wenigstens einer Größe, die für die zum zweiten Zeitpunkt im Fluidbehälter vorhandene Fluidmenge repräsentativ ist.

**2.** Verfahren nach Anspruch 1, bei welchem das Bestimmen der zum ersten Zeitpunkt im Fluidbehälter vorhandenen Fluidmenge das Auslesen einer Informationsspeichereinrichtung umfasst.

**3.** Verfahren nach einem der vorangegangenen Ansprüche, umfassend:
Anzeigen der wenigstens einen Größe, die für die Fluidmenge im Fluidbehälter repräsentativ ist.

**4.** Verfahren nach einem der vorangegangenen Ansprüche, wobei die wenigstens eine Größe die restliche Fluidmenge im Fluidbehälter und/oder die Restlaufzeit einer mit dem Fluid betriebenen Vorrichtung und/oder die Anzahl von mit der restlichen Fluidmenge noch möglichen Arbeitsvorgängen umfasst.

**5.** Verfahren nach einem der vorangegangenen Ansprüche, umfassend:
Durchführen von Sicherheitsmaßnahmen, wenn die wenigstens eine repräsentative Größe wenigstens einen vorbestimmten Wert unterschreitet oder überschreitet und/oder wenn die am Fluidbehälter vorgesehene Information nicht auslesbar ist und/oder wenn am Fluidbehälter keine Information vorgesehen ist und/oder wenn die Informationsspeichereinrichtung nicht ausgelesen und/oder nicht beschrieben werden kann.

**6.** Verfahren nach Anspruch 5, bei welchem die Sicherheitsmaßnahmen das Aussenden eines akustischen und/oder optischen Signals und/oder das Blockieren der Fluidentnahme umfassen.

**7.** Verfahren nach einem der vorangegangenen Ansprüche, bei welchem das Auslesen und/oder das Speichern von Information irreversible Änderungen an der Informationsspeichereinrichtung verursacht.

**8.** Fluidbehälter, umfassend:
eine Informationsspeichereinrichtung.

**9.** Fluidbehälter nach Anspruch 8, umfassend:
eine Kodiereinrichtung.

**10.** Fluidbehälter nach Anspruch 8 oder 9, bei welchem das Speichern von Information in der Informationsspeichereinrichtung des Fluidbehälters irreversible Änderungen an der Informationsspeichereinrichtung bewirkt.

**11.** Fluidbehälter nach Anspruch 10, bei welchem die Informationsspeichereinrichtung eine Anordnung von Leiterbahnen umfasst, wobei die Information in der Anordnung von intakten oder defekten Leiterbahnen gespeichert ist.

**12.** Fluidbehälter nach einem der Ansprüche 8 bis 11, bei welchem die Informationsspeichereinrichtung einen elektrischen und/oder magnetischen Datenspeicher umfasst.

**13.** Fluidbehälter nach Anspruch 12, bei welchem die Informationsspeichereinrichtung einen EEPROM-Chip und/oder eine Magnetfolie umfasst.

**14.** Fluidentnahmesystem zur Verwendung mit einem Fluidbehälter nach einem der Ansprüche 8 bis 13, umfassend:
eine Fluidentnahmeeinrichtung zum Anschließen des Fluidbehälters,
eine Steuereinrichtung,
eine Lese-/Schreibeinrichtung, um die Informationsspeichereinrichtung des Fluidbehälters auszulesen.

**15.** Fluidentnahmesystem nach Anspruch 14, bei welchem die Lese-/Schreibeinrichtung weiter so ausgebildet ist, dass die Informationsspeichereinrichtung des Fluidbehälters durch die Lese-/Schreibeinrichtung beschreibbar ist.

**16.** Fluidentnahmesystem nach Anspruch 14 oder 15, umfassend:
eine Informationsspeichereinrichtung.
